(19) Europäisches Patentamt
European Patent Office
Office européen des brevets

(11) **EP 1 175 524 B1**

(12) **EUROPEAN PATENT SPECIFICATION**

(45) Date of publication and mention
of the grant of the patent:
**15.09.2004 Bulletin 2004/38**

(51) Int Cl.$^7$: **D04H 1/54**, D04H 13/00,
D04H 3/04, D04H 1/74

(21) Application number: **00926081.1**

(22) Date of filing: **18.04.2000**

(86) International application number:
**PCT/US2000/010378**

(87) International publication number:
**WO 2000/063478 (26.10.2000 Gazette 2000/43)**

(54) **A STRETCH RECOVERABLE NONWOVEN FABRIC AND A PROCESS FOR MAKING**

VLIESSTOFF MIT STRECK- UND RÜCKFÄHIGKEITEN UND VERFAHREN ZU DESSEN
HERSTELLUNG

TISSU NON TISSE RECUPERABLE APRES ETIRAGE ET SON PROCEDE DE FABRICATION

(84) Designated Contracting States:
**DE ES FR GB IT**

(30) Priority: **19.04.1999 US 129941 P**
**18.04.2000 US 551075**

(43) Date of publication of application:
**30.01.2002 Bulletin 2002/05**

(73) Proprietor: **E.I. DU PONT DE NEMOURS AND
COMPANY**
**Wilmington, Delaware 19898 (US)**

(72) Inventors:
• **TRAVIS, Anthony**
**Cumbria CA13 0AH (GB)**

• **MCNICHOLL, Desmond Bernard**
**Cockermouth Cumbria CA13 ONU (GB)**

(74) Representative: **Webber, Philip Michael**
**Frank B. Dehn & Co.,**
**179 Queen Victoria Street**
**London EC4V 4EL (GB)**

(56) References cited:
| | |
|---|---|
| WO-A-95/03443 | GB-A- 1 208 785 |
| GB-A- 2 085 938 | US-A- 4 612 228 |
| US-A- 4 634 612 | US-A- 5 393 599 |
| US-A- 5 424 987 | US-A- 5 851 935 |

**Description**

## FIELD OF THE INVENTION

This invention relates to nonwoven fabrics having little or no stretchability that can be rendered stretch recoverable.

## BACKGROUND OF THE INVENTION

It is well known that nonwoven fabrics have significant cost advantages over woven and knit fabrics, however nonwovens do not typically have good elastic properties. However, there are applications where the combination of low cost of nonwovens yet with some amount of elasticity is desirable.

US patent 5,491,016 describes a heat shrinkable nonwoven which comprises outer layers of thermoplastic staple fibers and an inner layer containing heat shrinkable fibers. In general, this patent discloses heating a point-bonded nonwoven web containing heat-shrinkable fibers to cause shrinkage between the bond points. The layers are point-bonded together at spaced locations and then uniformly heated in a relaxed state resulting in increased bulk. The fibers in the layers are carded or oriented substantially in the machine direction of the web. The preferred heat shrinkable fiber is either a 2-component side-by-side or sheath/core fiber. The amount of bicomponent fibers disposed in the central layer is less than 25% of the basis weight of the entire web. The pattern of the point-bonding is considered important - the pattern should extend across the web in a cross machine direction or at an acute angle thereto, such as in a zigzag or chevron pattern. This results in point-bonding of fibers relative to the machine direction, with maximum bulking or decrease in length in the machine direction, with little or no decrease in width in the cross-machine direction. The heating in a relaxed state is conducted at a temperature sufficient to cause maximum shrinkage of the bicomponent fibers, without having any significant thermal effect on the staple fibers. For example, a stream of hot air may be passed through the web, or the web may be gradually heated on rollers. Other acceptable methods include radiant heating under conditions that prevent excessive heating of the outer layers. The shrinkage of the bicomponent fibers results in shrinkage between the bond sites. In a specific example, during the heating step, the feed of the web into the heater and the recovery rate from the heater to a cooling zone was regulated to accommodate about 20% shrinkage of the web in the machine direction.

This reference addresses relaxation of shrinkage to increase bulk but it is not relevant to making a substantially non-stretchable material both stretchable and stretch-recoverable.

GB 1 208 785 discloses a non-woven web comprised of randomly disposed fibers needle punched to form a dense, unretracted fabric wherein at least 50% of said fibers are bicomponent staple fibers composed of elastic and inelastic fiber components.

US Patent No. 5,851,935 discloses an elastic laminated fabric which is elastic in the cross direction. The laminate includes an elastomeric film having one or two nonwoven webs of carded thermoplastic staple fibers thermally point bonded thereto using heating calendar rolls.

US Patent No. 5,393,599 discloses elastic fabrics which exhibit low extensibility in the machine direction and have substantial elastic properties in the cross-machine direction. The fabrics include an elastic layer and a fibrous layer which are combined together.

WO 95/03443 discloses elastic nonwoven composite fabrics formed from the combination of a plurality of cooperative elastic layers including an elastomeric fibrous layer and an elastomeric net layer which has increased elastic properties as compared to the fibrous layer.

US Patent No. 4,612,228 discloses an artificial grain leather sheet composed of ultrafine super-entangled synthetic fibers. The sheet has a body portion and a grain surface portion wherein the ultrafine fibers are supertangled at a multiplicity of entangling points.

US Patent No. 4,634,612 discloses a decorative sheet material comprising a thermally bonded nonwoven tissue-like base layer and at least a monolayer of a multiplicity of substantially parallel, continuous, non-cellulosic, multifilament yarns substantially covering a first side of said base layer and thermally laminated to said base layer. At least one side of said base layer is sonically bonded to a fibrous substrate.

## BRIEF DESCRIPTION OF THE DRAWINGS

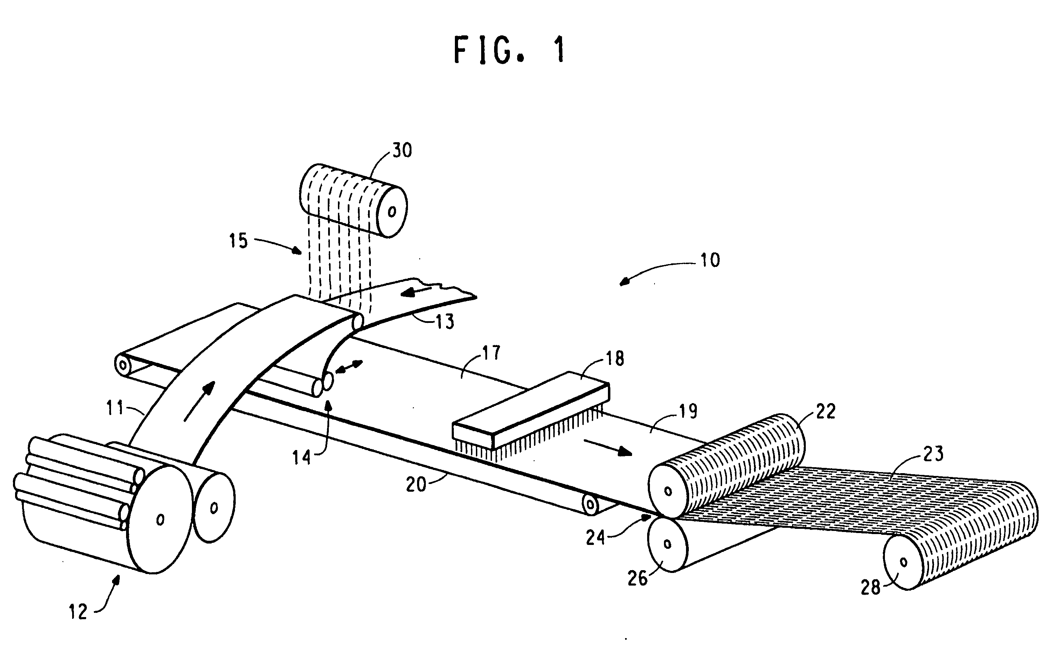

The invention may be more easily understood by reference to the accompanying drawing, which is a schematic of an apparatus for performing certain aspects of the invention.

## SUMMARY OF RESULTS

In one aspect of this invention, there is provided a stretch-recoverable nonwoven fabric comprising staple fibers according to claim 1. The fabric is thermally point-bonded with a particular geometric pattern discussed below and has a stretchability of about at least 3% in the cross-machine direction and substantially 100% stretch-recoverability.

In another aspect of this invention, there is provided a stretch recoverable composite fabric according to claim 7. This fabric comprises a nonwoven fabric comprising staple fibers, wherein the fabric is thermally point-bonded with a particular geometric pattern discussed below and an elastic woven fabric, wherein the nonwoven fabric and the woven fabric are laminated together, thereby forming the composite fabric.

In yet other aspect of this invention, there are provided processes for making the aforementioned fabrics.

## DETAILED DESCRIPTION OF THE INVENTION

It is an object of this invention to process a nonwoven fabric so as to achieve a certain amount of stretchability and stretch recovery. It is a particular object that the stretch recoverable nonwoven fabric be useful for shoe liners. Some terms should be defined at this point. "Stretchability" is the degree of stretch that the fabric can undergo without permanent deformation. In this invention, this is essentially the same as the degree of "shrinkage" that the fabric experiences during the treatment that will be described below. "Stretch recovery" is a measure of the extent to which the fabric recovers to its original length after stretching, in other words - its elasticity.

In order to impart a degree of stretchability into nonwoven fabrics, the process will entail a treatment wherein the nonwoven fabric is shrunk. Typically, such a nonwoven fabric would remain in the shrunken condition. However, it has been found that the disclosed process can render a shrunken nonwoven fabric stretch recoverable in later use by allowing the fabric to shrink in a controlled manner.

A fabric that can be used is a nonwoven made from polyamide staple fiber. Examples of suitable polyamide fibers include nylon 6 staple fibers, nylon 66 staple fibers, nylon 6/nylon 66 sheath/core staple fibers, and blends thereof. The bicomponent fibers would be preferred and would preferably comprise at least 30% of the fabric. Preferably, the staple fiber length is between about 50 and 100 mm with the fiber size between about 1 and 10 decitex (dtex). The starting material for this invention is formed from staple fibers that are processed into a web and thermally point-bonded.

This is generally depicted in the figure, which includes elements that are well known to those of ordinary skill in the nonwovens art, and particularly for carded nonwovens. The staple fibers are run through carding machine 12 to from carded web 11. Although the figure shows two carded webs 11 and 13 being fed into crosslapper 14, it is understood that carded web 13 is also the product of a carding machine. The web 11 along with carded web 13 is passed into the crosslapper 14 and a multilayered web 17 is formed. The double-edged arrow shows that the crosslapper moves back and forth across the width of belt 20, which travels in a direction 90 to the crosslapper movement. The web 17 is typically, passed through a needle-puncher 18. Needle punching, although desirable, is not required and other consolidation methods can be used. Needle-punched web 19 is then fed into nip 24 formed by rolls 22 and 26 is thermally point-bonded into web 23 and then wound up on roll 26. The fabric is point-bonded by passing the fabric between a backing roll and a bonding roll having the desired pattern embossed thereon. The point-bonding provides a particular pattern, which facilitates shrinkage of the point-bonded nonwoven fabric during wet processing. The bonding temperature is set according to the fiber being used; for example, nylon 6 and nylon 66 melt at 220 C and 260 C, respectively. Instead of the nylon fibers, 100% polyester or 100% polypropylene could be used or blends with the various forms of nylon fibers as noted above can also be used. In certain cases acrylic, cotton or wool can be used.

The bonding pattern is selected to allow the fibers to bulk up between the bond points resulting in a decrease in the dimension of the fabric in substantially one direction. Certain patterns work and others do not. For example, it has been found that certain regular geometric patterns such as pique work whereas certain patterns having a random pattern do not work. The pique pattern, which is the preferred pattern, is registered under United States Trademark 1,413,427. The pique pattern provides point-bonds that are approximately 2.54 mm long and 0.38 mm wide, with 15 bonds per cm$^2$ for a total bonded area of approximately 15 percent of the total surface. The point-bonds can be larger however; the total point-bonded area is preferably less than about 25% and preferably between about 13 and 17%. As the point-bonded area increases there is a corresponding decrease in the ability of the fabric to shrink. Other patterns that can be used are designated barkweave and fineweave. The barkweave pattern provides point-bonds that are approximately 1.91 mm long and 0.76 mm wide, with a total bonded area of approximately 7-9% percent of the total surface. The fineweave pattern provides point-bonds that are approximately 1.09 mm long and 0.43 mm wide with a total bonded area of approximately 4-1/2 to 6-1/2 percent of the total surface. With reference to the figure it is noted that for making the pique pattern top roll 22 is embossed and opposing bottom roll 26 is plain. On the other hand, for making the barkweave and the fineweave patterns, both roll 22 and 26 are embossed. It is also possible to perform this process with continuous filament fibers that are thermally point-bonded.

A point-bonded staple nonwoven web is allowed to shrink by about 3-10%, preferably 5-10%, and more preferably 5-6% in one direction (typically, the width, i.e., the cross machine direction) by heating the fabric in a wet treatment step. The wet treatment can be any wet process that causes the fibers to bulk up between the bond points, resulting in shrinkage of the point-bonded fabric. However, a convenient method to accomplish the shrinkage is during the dyeing process because it is often desirable to color the fabrics. Any fibers that cause the fabric to shrink when heated in a wet process can be used.

After the wet-treatment, the fabric is run through a drying step. While it would in most cases be more efficient to dry the fabric at an elevated temperature, the primary point is to allow the fabric to dry in a relaxed state. The fabric should be dried in a relaxed state and not stretched back to its original size, i.e., the fabric would maintain its shrunken dimension once dry. It is acceptable for the fabric to be restretched slightly during drying so long as the final fabric has a stretchability of at least about 3%, and preferably at least about 5%. The resulting nonwoven fabric is stretchable to the approximate extent and in the direction that it was shrunk. As noted above, the width is the dimension that is usually shrunk. However, there may be some minor degree of stretching (on the order of about 1%) in the machine direction as a result of pulling the fabric through the drying step. However, it should be noted that the nonwoven fabric can be similarly rendered stretchable in the length (i.e., machine direction). Further, the nonwoven fabric can be rendered stretchable in both the machine and cross-machine directions.

In another embodiment, the stretchable nonwoven fabric as provided above can be laminated to a stretch-recoverable fabric made using an elastic material, such as a spandex/cotton blend that can be woven, knit, etc., to provide a stretch-recoverable laminate. LYCRA® spandex is an example of what can be used. LYCRA® is a registered trademark of E.I. du Pont de Nemours and Company of Wilmington, DE. Any elastic fiber that imparts some degree of stretch to the laminate is desirable. The nonwoven fabric and the elastic material can be joined to form the laminate with adhesives, ultrasonic bonding, by needling, or any other method that does not interfere with the stretch-recovery imparted to the material. There are several stretchable adhesives available that will work for this purpose. Hot melt adhesives are also suitable and can be applied intermittently without substantially reducing the stretch recovery of the fabric. Examples of adhesives that can be used are polyolefins and copolyamides.

Yet another embodiment is to blend spandex (or other elastic staple fibers) with nylon (or other polymer) staple fibers. The elastic fiber would be present at about 5% of the total weight of the nonwoven fabric. The nonwoven point-bonded fabric would be formed from the mixture of the fibers and then treated as described above. The point bonding locks the spandex fibers into the fabric and the stretchability and stretch recovery are provided between the bod point of the spandex. The presence of the LYCRA® spandex allows the final fabric to recover more fully and more repeatably after being stretched in use. While it is preferable to achieve 100% stretch recovery a slightly lower percentage of stretch recovery may be considered acceptable.

The stretch-recoverable fabric can be made with an elastic material laminated to it or with blended-in elastic fibers. In which case the resultant fabric has increased stretchability as well as repeatable stretch recovery properties. Regardless, the stretch-recoverable fabric allows use in more molded shoe designs that would otherwise crease up at the tight contours in comparison to the conventional non-stretch-recoverable fabric.

Additionally, to provide the stretch recoverable fabric, elastomeric fibers can be incorporated into a different nonwoven web structure using several different methods. For one, a method is described by reference to apparatus 10 in the figure. A multiplicity of continuous elastomeric filaments 15 is fed from a beam 30 between nonwoven web 11 and 13 as the webs are fed into crosslapper 14. In this method the beam 30 is prepared and mounted in such a way as to be able to feed the fibers from the beam onto the nonwoven webs as the web is fed into a crosslapper. The filaments 15 are first introduced into the webs while the crosslapper is stopped and then as the crosslapping operation proceeds the filaments are drawn between the webs. A multiplicity of elastic fibers is typically used. For example, when using spandex that comprises about 5 weight percent of the web about 300 filaments of 22 decitex each can be used. Such an arrangement would be applicable to a full-scale operation where the nonwoven web has a width of about 1-1/2 meters and a basis weight of about 150g/m$^2$. Accordingly, if the spandex were of a higher decitex, a lesser amount of filaments would be used. The beam 30 is driven at a speed to match the input speed of the nonwoven webs into the crosslapper. Suitable pre-tensioning devices control tension of the elastomeric fibers.

In another method, layers of a nonwoven web can be used to unwind continuous filament elastomeric fibers directly from bobbins (not shown) as the nonwoven webs are fed into the crosslapper. In this method, bobbins (not shown) of the elastomeric fiber are positioned such that lengths of the fiber can be laid onto the same input lattice(s) of a crosslapper as the nonwoven web(s). Although not shown in the figure, a multiplicity of bobbins can be used wherein an individual filament is unwound from each bobbin. The axes of the bobbins would be at 90 degrees to the axis of beam 30, but the elastic fibers would be oriented in the same direction as when fed from the beam 30. The crosslapper operates by folding several layers of the nonwoven web into a multi-layered web 17. The motion of the crosslapper and the movement of the nonwoven web cause the elastomeric fibers to unwind from the bobbins ensuring that each layer of the nonwoven web contains continuous filaments of elastomeric fiber. Suitable pre-tensioning devices control tension of the elastomeric fiber. When introducing the filaments from either the beam 30 or the bobbins, the filaments would be oriented in substantially the cross-machine direction relative to cross-lapped web 17.

Yet another method is feeding a scrim of elastomeric fibers onto a nonwoven web as the web is fed into a crosslapper. Although not depicted in The figure, this method incorporates a previously prepared scrim made of elastomeric fibers which has been wound onto a roll that would be positioned similarly to the beam 30. The scrim is unwound between the nonwoven webs as they are fed into the crosslapper. By using the scrim, it would be possible to achieve stretch recovery in both the cross-machine and machine directions. Tension of the scrim is achieved through a combination of unwinding speed and a pre-tensioning device.

In the aforementioned methods, after crosslapping the webs are needle-punched and then thermally bonded. Although preferred, it is not necessary to needle punch the crosslapped webs before they are point bonded.

## EXAMPLES

As noted above, stretchability is the degree of stretch that the fabric can undergo without permanent deformation. If the fabric experiences a reduction of 6% in width during wet treatment, then it can be stretched 6% in the width without permanent deformation; therefore it has a stretchability of 6%. Stretch recovery is a measure of the extent to which the fabric recovers to its original length after stretching, in other words - its elasticity. It should be noted however that in this invention the "original" length is the reduced dimension achieved by the wet treatment. Stretch recovery was determined in the examples by the following method:

1. cut 10 samples 30 cm x 5 cm across the width of the fabric, the fabric having a width of 30 cm.
2. measure off and mark two lines 25 cm apart equidistant from each end of the sample, which is the gauge length.
3. insert the samples into jaws of an Instron test machine, aligning the upper and lower jaws with the lines marked on the sample.
4. stretch fabric as represented by the 25 cm gauge length to 26.5 cm at a speed of 20 cm/min.
5. release the fabric from the jaws after they have reached the 26.5 cm distance.
6. re-measure the gauge length marked on the fabric and determine the stretch recovery as follows.

$$\text{Stretch Recovery (\%)} = \frac{\text{Stretched Length} - \text{Length after recovery}}{\text{Stretched Length} - \text{Original Length}} 100$$

7. repeat for remaining 9 samples.
8. report the average of the ten samples.

### Example 1

A needle-punched carded nonwoven fabric formed from nylon 66/6 core/sheath staple fibers (, 65 mm staple length, 3.3 dtex) and point-bonded with a pique pattern was used in this example. The fabric had a basis weight of 150 g/m$^2$. The point bonds were approximately 2.54 mm long and 0.38 mm wide, with 15 bonds per cm$^2$ for a total bonded area of approximately 15 percent of the total surface.

The point-bonded fabric was dyed in a winch dye bath. The winch was heated to 50 °C for 10 minutes, the dye added, and the temperature maintained at 50 °C for an additional 10 minutes. The temperature was then raised to a boil and the fabric was dyed at the boil for 60 minutes. During the dyeing process, the fabric was relaxed in both the length and width direction. The dyed fabric had shrunk by approximately 6% in the width (cross-direction) from a starting fabric width of 147 cm to a dyed fabric width of 138 cm. Following dyeing, the fabric was wound under tension prior to drying.

The dyed fabric was unwound and dried at 170 °C using a pin stenter that was set at 138 cm width to ensure that the fabric was dried in a relaxed state in the width direction. The residence time in the dryer was 30 seconds at 170 °C. The dried fabric had a width of 138 cm and a length essentially equal to the starting undyed fabric length. The dried fabric had a stretchability of 6% in the width direction with a stretch recovery of 100%.

### Example 2

The starting fabric for Example 2 was identical to that used in Example 1 except that the bi-component staple nonwoven was point-bonded in a barkweave pattern. The dyeing and drying procedure of Example 1 was followed to obtain a fabric that shrank 6% in width at approximately constant length. The resulting fabric had a stretchability of 6% in the width direction, with 100% recovery.

Example 3

This example demonstrates preparation of a composite fabric formed by lamination of the stretchable point-bonded nonwoven of Example 1 and an elastic woven backing fabric using an adhesive web. The elastic backing fabric used contained 95 weight percent cotton and 5 weight percent LYCRA@ spandex (Mac Elasto Strong Purgata, supplied by Lenzi Egisto SPA, Italy).

The woven and nonwoven layers were laminated using a stretchable thermoplastic copolyamide adhesive web having a melting range of between 80 and 85 °C. The adhesive was applied at $25 \pm 5$ g/m$^2$. The laminate was formed under pressure at elevated temperature using a hot melt technique. The composite fabric had a stretchability of 10% in the width direction with a stretch recovery of 100%.

Example 4

This example demonstrates preparation of a composite fabric formed by lamination of the stretchable point-bonded nonwoven of Example 1 and an elastic woven backing fabric using an adhesive film. The elastic backing fabric used contained 95 weight percent cotton and 5 weight percent LYCRA® spandex (Mac Elasto Strong Purgata, supplied by Lenzi Egisto SPA, Italy).

The woven and nonwoven layers were laminated using a thermoplastic polyolefin continuous film having a melting range of between 85 and 90°C. The adhesive was applied at $25 \pm 5$ g/m$^2$. The laminate was formed under pressure at elevated temperature using a hot melt technique. The composite fabric had a stretchability of 10% in the width direction with a stretch recovery of 100%.

**Claims**

1. A stretch recoverable nonwoven fabric comprising staple fibers, **characterised in that** the fabric is thermally point-bonded with a geometric pattern selected from the group consisting of a pique pattern having bonds 2.54 mm long and 0.38 mm wide, or bark weave pattern having bonds 1.91 mm long and 0.76 mm wide and a fine weave pattern having bonds 1.09 mm long and 0.43 mm wide and has a stretchability of about at least 3% in the cross-machine direction.

2. The fabric of Claim 1, wherein the stretchability is about at least 5%.

3. The fabric of Claim 1 or 2, wherein the stretch-recoverability is 100%.

4. The fabric of Claim 1, wherein the staple fibers are selected from the group consisting of nylon 6, nylon 66, nylon 6/nyoln 66 sheath/core, polyester, polypropylene, and blends thereof.

5. The fabric of Claim 1, further comprising elastic staple fiber present at about 5% of the total weight of the fabric.

6. The fabric of Claim 5, wherein the elastic staple fibers are spandex

7. A. stretch recoverable composite fabric comprising (a) a stretch recoverable nonwoven fabric according to claim 1 and (b) an elastic woven fabric, wherein the nonwoven fabric and the woven fabric are laminated together, thereby forming the composite fabric.

8. The stretch recoverable composite fabric of Claim 7, wherein the woven fabric comprises about 95% cotton and about 5% spandex by weight of the woven fabric.

9. A process for imparting stretch-recoverability to a nonwoven fabric **characterised in that** it comprises the steps of

   providing the nonwoven fabric,
   thermally point-bonding the fabric in one of the geometric patterns selected from the group consisting of a pique pattern having bonds 2.54 mm long and 0.38 mm wide, or bark weave pattern having bonds 1.91 mm long and 0.76 mm wide and a fine weave pattern having bonds 1.09 mm long and 0.43 mm wide,
   heating the fabric in a wet treatment,
   drying the fabric in a relaxed state.

10. The process of Claim 9, wherein the nonwoven fabric comprises staple fibers selected from the group consisting of nylon 6, nylon 66, nylon 6/nylon 66 sheath/core, polyester, polypropylene, and blends thereof.

11. The process of Claim 9, wherein the heating step comprises dyeing.

12. The process of Claim 11, wherein the nonwoven fabric further comprises elastic staple fibers.

13. The process of Claim 12, wherein the elastic staple fibers are spandex.

14. The process of claim 9, wherein said nonwoven fabric is a composite fabric, further comprising the steps of

> providing an elastic woven fabric,
> laminating the elastic woven fabric to the nonwoven fabric, thereby
> forming the composite fabric.

15. The process of Claim 14, wherein the laminating step is selected from the group consisting of adhesive bonding, needling, and ultrasonic bonding.


**Patentansprüche**

1. Vliesstoff mit Streckerholung, aufweisend Stapelfasern;
   **dadurch gekennzeichnet, dass** das textile Flächengebilde mit einem geometrischen Muster thermisch punktgebondet ist, ausgewählt aus der Gruppe, bestehend aus einem Piqué-Bindungsmuster mit Bindungen einer Länge von 2,54 mm und einer Breite von 0,38 mm oder einem Borkengewebemuster mit Bindungen einer Länge von 1,91 mm und einer Breite von 0,76 mm und einem Feingewebemuster mit Bindungen einer Länge von 1,09 mm und einer Breite von 0,43 mm; das über eine Verstreckbarkeit von mindestens etwa 3% quer zur Verarbeitungsrichtung verfügt.

2. Textiles Flächengebilde nach Anspruch 1, worin die Verstreckbarkeit mindestens etwa 5% beträgt.

3. Textiles Flächengebilde nach Anspruch 1 oder 2, worin die Streckerholung 100% beträgt.

4. Textiles Flächengebilde nach Anspruch 1, worin die Stapelfasern ausgewählt sind aus der Gruppe, bestehend aus Nylon 6, Nylon 66, Nylon 6/Nylon 66-Mantel/Kern, Polyester, Polypropylen und Blends davon.

5. Textiles Flächengebilde nach Anspruch 1, ferner aufweisend elastische Stapelfaser, die zu etwa 5% des Gesamtgewichts des textilen Flächengebildes vorliegen.

6. Textiles Flächengebilde nach Anspruch 5, worin die elastischen Stapelfasern Spandex sind.

7. Verbundtextil, aufweisend: (a) einen Vliesstoff mit Streckerholung nach Anspruch 1 und (b) eine elastische Webware, worin der Vliesstoff und die Webware miteinander laminiert sind, wodurch ein Verbundtextil gebildet wird.

8. Verbundtextil mit Streckerholung nach Anspruch 7, worin die Webware etwa 95% Baumwolle und etwa 5 Gew.% der Webware Spandex aufweist.

9. Verfahren zum Vermitteln von Streckerholung eines Vliesstoffes, umfassend die Schritte:

> Bereitstellen des Vliesstoffes;

> thermisches Punktbonden des textilen Flächengebildes mit einem der geometrischen Muster, ausgewählt aus der Gruppe, bestehend aus Piqué-Bindungsmuster mit Bindungen einer Länge von 2,54 mm und einer Breite von 0,38 mm oder Borkengewebemuster mit Bindungen einer Länge von 1,91 mm und einer Breite von 0,76 mm und einem Feingewebemuster mit Bindungen einer Länge von 1,09 mm und einer Breite von 0,43 mm;

> Erhitzen des textilen Flächengebildes in einer Nassbehandlung;

Trocknen des textilen Flächengebildes in einen erholten Zustand.

**10.** Verfahren nach Anspruch 9, worin der Vliesstoff Stapelfasern aufweist, die ausgewählt sind aus der Gruppe, bestehend aus Nylon 6, Nylon 66, Nylon 6/Nylon 66-Mantel/Kern, Polyester, Polypropylen und Blends davon.

**11.** Verfahren nach Anspruch 9, worin der Schritt des Erhitzens ein Färben umfasst.

**12.** Verfahren nach Anspruch 11, worin der Vliesstoff ferner elastische Stapelfaser aufweist.

**13.** Verfahren nach Anspruch 12, worin die elastischen Stapelfasern Spandex sind.

**14.** Verfahren nach Anspruch 9, worin der Vliesstoff ein Verbundtextil ist, ferner aufweisend die Schritte:

Bereitstellen einer elastischen Webware;

Laminieren der elastischen Webware mit dem Vliesstoff, wodurch das Verbundtextil gebildet wird.

**15.** Verfahren nach Anspruch 14, worin der Schritt des Laminierens ausgewählt ist aus der Gruppe, bestehend aus Klebbonden, Vernageln und Ultraschallbonden.

**Revendications**

**1.** Tissu non tissé à récupération d'élasticité comprenant des fibres courtes, **caractérisé en ce que** le tissu est lié thermiquement par point selon un motif géométrique choisi parmi le groupe constitué d'un dessin de piqué ayant des liaisons de 2,54 mm de long et 0,38 mm de large, ou un dessin d'armure en écorce ayant des liaisons de 1,91 mm de long et 0,76 mm de large et un dessin d'armure fine ayant des liaisons de 1,09 mm de long et 0,43 mm de large et a une extensibilité d'environ au moins 3% dans le sens perpendiculaire au sens machine.

**2.** Tissu selon la revendication 1 dans lequel l'extensibilité est d'environ au moins 5%.

**3.** Tissu selon la revendication 1 ou 2 dans lequel la capacité de récupération après étirage est de 100%.

**4.** Tissu selon la revendication 1 dans lequel les fibres courtes sont choisies parmi le groupe constitué du Nylon 6, du Nylon 66, du Nylon 6/Nylon 66 gaine/âme, du polyester, du polypropylène et des mélanges de ceux-ci.

**5.** Tissu selon la revendication 1 comprenant en plus des fibres élastiques courtes présentes à environ 5% du poids total du tissu.

**6.** Tissu selon la revendication 5 dans lequel les fibres élastiques courtes sont du spandex.

**7.** Tissu composite récupérable après étirage comprenant (a) un tissu non tissé récupérable après étirage selon la revendication 1 et (b) un tissu tissé élastique, dans lequel le tissu non tissé et le tissu tissé sont stratifiés conjointement, en formant de cette façon le tissu composite.

**8.** Tissu composite récupérable après étirage selon la revendication 7 dans lequel le tissu tissé comprend environ 95% de coton et environ 5% de spandex en poids du tissu tissé.

**9.** Procédé pour conférer la capacité de récupération après étirage à un tissu non tissé **caractérisé en ce qu'**il comprend les étapes suivantes:

la fourniture du tissu non tissé,
la liaison thermique par point du tissu selon l'un des motifs géométriques choisi parmi le groupe constitué d'un dessin de piqué ayant des liaisons de 2,54 mm de long et 0,38 mm de large, ou un dessin d'armure en écorce ayant des liaisons de 1,91 mm de long et 0,76 mm de large et un dessin d'armure fine ayant des liaisons de 1,09 mm de long et 0,43 mm de large,
le chauffage du tissu dans un traitement humide,
le séchage du tissu à l'état relâché.

10. Procédé selon la revendication 9 dans lequel le tissu non tissé comprend des fibres courtes choisies parmi le groupe constitué du Nylon 6, du Nylon 66, du Nylon 6/Nylon 66 gaine/âme, du polyester, du polypropylène et des mélanges de ceux-ci.

11. Procédé selon la revendication 9 dans lequel l'étape de chauffage comprend la teinture.

12. Procédé selon la revendication 11 dans lequel le tissu non tissé comprend en plus des fibres élastiques courtes.

13. Procédé selon la revendication 12 dans lequel les fibres élastiques courtes sont du spandex.

14. Procédé selon la revendication 9 dans lequel ledit tissu non tissé est un tissu composite, comprenant en plus les étapes suivantes:

la fourniture d'un tissu tissé élastique,
la stratification du tissu tissé élastique au tissu non tissé, en formant de cette façon le tissu composite.

15. Procédé selon la revendication 14 dans lequel l'étape de stratification est choisie parmi le groupe constitué de la liaison adhésive, de l'aiguilletage et de la liaison par ultrasons.

FIG. 1